# EUROPEAN PATENT APPLICATION

(11) **EP 4 813 924 A1**
(43) Date of publication of application: **30.09.2026**
(21) Application number: 26165834.8
(22) Date of filing: 18.03.2026
(51) Int. Cl.: C01G 53/50, C01G 45/00, C01G 53/51, C01G 53/82, H01M 4/505, H01M 4/525

(54) **LITHIUM-RICH MANGANESE-BASED CATHODE MATERIAL AND PREPARATION METHOD THEREOF**

(30) Priority: 19.03.2025 TW 114110353
(71) Applicant: Hon Hai Precision Industry Co., Ltd., 236038 New Taipei City (TW); SolidEdge Solution Inc., 300094 Hsinchu City (TW)
(72) Inventor: HUNG, Chen-Tsung, 300094 Hsinchu City (TW); CHANG, Tseng-Lung, 300094 Hsinchu City (TW)
(74) Representative: Winter, Brandl - Partnerschaft mbB

(57) **Abstract**

The present disclosure provides a lithium-rich manganese-based cathode material. A chemical formula of the lithium-rich manganese-based cathode material is Li_{1.2-y}A_{y}Ni_{0.4x}Mn_{0.8-0.4x}O₂, A is Na, K, Ti, or combinations thereof, where 0.375≤x≤0.5, and 0.03≤y≤0.07. The present disclosure further provides a method for preparing the lithium-rich manganese-based cathode material. The lithium-rich manganese-based cathode material of the present disclosure has good electrochemical stability.

## Description

### BACKGROUND

### Field of Invention

The present disclosure relates to a lithium-rich manganese-based cathode material and a preparation method of lithium-rich manganese-based cathode material.

### Description of Related Art

In recent years, as battery energy density increases, the lithium-rich manganese-based cathode material (LMR) has attracted increasing attention due to its high energy density. The lithium-rich manganese-based cathode material can be described as xLi₂MnO₃ · (1-x)LiMO₂, especially the cobalt-free, low-nickel and high-manganese stoichiometric design, which has an advantage of low cost and has the characteristics of high reversible capacity (>250mAh/g) and high voltage (>4.5V).

The LMR structure is composed of LiMO₂ layered structure and Li₂MnO₃ (lithium-rich phase). The former can contribute capacity at voltages <4.5V. The activation voltage for lithium removal of the latter is ≥4.5V. In addition to being difficult to pair with high-voltage-resistant electrolytes, the lithium-rich phase of Li₂MnO₃ is also prone to removing Li₂O and releasing the O element (generate gas) in the structure, resulting in a large irreversible capacity. Therefore, when the content of Mn is higher, LMR also produces a correspondingly higher proportion of the lithium-rich phase of Li₂MnO₃, and the overall LMR can also obtain a higher reversible capacity (charged to 4.6V, the reversible capacity is about 250 mAh/g). When the content of Ni is higher, the LiMO₂ layered structure contributes to a higher capacity. The LiMO₂ layered structure is more stable than the lithium-rich phase of Li₂MnO₃, so it can reduce the irreversible capacity, but the reversible capacity corresponding to the overall LMR is relatively low (charged to 4.6V, the reversible capacity is about 220 mAh/g).

In view of the above, a lithium-rich manganese-based cathode material with high electrochemical stability is necessary.

### SUMMARY

The present disclosure provides a lithium-rich manganese-based cathode material. A chemical formula of the lithium-rich manganese-based cathode material is Li_{1.2-y}A_{y}Ni_{0.4x}Mn_{0.8-0.4x}O₂, A is Na, K, Ti, or combinations thereof, wherein 0.375≤x≤0.5, and 0.03≤y≤0.07.

In some embodiments, the chemical formula of the lithium-rich manganese-based cathode material is Li_{1.15}Na_{0.05}Ni_{0.2}Mn_{0.6}O₂.

In some embodiments, a specific surface area of the lithium-rich manganese-based cathode material is from 1.8 m²/g to 2.5 m²/g.

In some embodiments, a porosity of the lithium-rich manganese-based cathode material is from 22.6 vol% to 28.4 vol%.

The present disclosure further provides a preparation method of a lithium-rich manganese-based cathode material, which includes the following steps. A weakly alkaline manganese salt is added in a nickel salt aqueous solution to form a first precipitation solution. A lithium salt and a metal salt is added in a manganese salt aqueous solution to form a second precipitation solution, in which the metal salt includes a metal ion, the metal ion includes Na⁺ , K⁺, Ti³⁺, or combinations thereof, and the manganese salt aqueous solution is acidic. The first precipitation solution and the second precipitation solution are mixed to form a precursor solution and removing liquid from the precursor solution to form a precursor dry powder. A heat treatment is performed to the precursor dry powder to form the lithium-rich manganese-based cathode material.

In some embodiments, a pH value of the first precipitation solution is from 6 to 7.

In some embodiments, a pH value of the second precipitation solution is greater than 9.

In some embodiments, the metal salt includes a metal carbonate, a metal hydroxide, a metal oxide, a metal nitrate, a metal acetate, a metal oxalate, or combinations thereof.

In some embodiments, during the heat treatment, a heat treatment temperature is between about 800°C and about 1100°C.

In some embodiments, during the heat treatment, a heat treatment time is between 8 hours and 16 hours.

In some embodiments, during the heat treatment, a heat treatment atmosphere includes air, pure oxygen or a mixture thereof.

In some embodiments, during the mixing of the first precipitation solution and the second precipitation solution, a heating temperature is between about 40°C and about 80°C.

In some embodiments, the first precipitation solution includes a nickel hydroxide precipitate.

In some embodiments, the second precipitation solution includes a manganese hydroxide precipitate.

In some embodiments, a molar ratio of a nickel salt in the nickel salt aqueous solution to the weakly alkaline manganese salt is (0.2-0.3): (0.265-0.3).

In some embodiments, a molar ratio of a manganese salt in the manganese salt aqueous solution, the lithium salt, and the metal salt is (0.265-0.3):(1.14-1.20):(0.02-0.06).

In some embodiments, a chemical formula of the lithium-rich manganese-based cathode material is Li_{1.2-y}A_{y}Ni_{0.4x}Mn_{0.8-0.4x}O₂, A is Na, K, Ti, or combinations thereof, wherein 0.375≤x≤0.5, and 0.03≤y≤0.07.

In some embodiments, a ratio of a molar number of the weakly alkaline manganese salt to a molar number of manganese in the lithium-rich manganese-based cathode material is (0.25~0.5):1.

In some embodiments, the chemical formula of the lithium-rich manganese-based cathode material is Li_{1.15}Na_{0.05}Ni_{0.2}Mn_{0.6}O₂.

In some embodiments, a specific surface area of the lithium-rich manganese-based cathode material is less than 2.5 m²/g.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a diagram of LMR polycrystalline powder of comparative example 1 of the present disclosure.
Fig. 2 is a diagram of the LMR polycrystalline powder of the embodiment 1 of the present disclosure.
Fig. 3 is a diagram of the LMR polycrystalline powder of comparative example 2 of the present disclosure.
Fig. 4 is a charge and discharge curve diagram of a button-type battery made using comparative example 1 of the present disclosure.
Fig. 5 is a charge and discharge curve diagram of a button-type battery made using embodiment 1 of the present disclosure.
Fig. 6 is a charge and discharge curve diagram of a button-type battery made using comparative example 2 of the present disclosure.
Fig. 7 is a schematic diagram of a cycle test of button-type batteries made of polycrystalline powders of embodiment 1 and comparative example 1 of the present disclosure.

### DETAILED DESCRIPTION

One aspect of the present disclosure provides a preparation method of a lithium-rich manganese-based cathode material. This preparation method mainly uses two different manganese sources to control the surface area of LMR. In order to reduce the release of a large amount of gas (such as carbon dioxide) by the reactants during high-temperature synthesis, the two manganese sources are reacted separately.

More specifically, the preparation method of a lithium-rich manganese-based cathode material includes the following steps. A weakly alkaline manganese salt is added in a nickel salt aqueous solution to form a first precipitation solution. To be specific, the nickel salt aqueous solution can be placed in a high-energy grinder for cyclic grinding, and the weakly alkaline manganese salt can be added during the grinding for joint grinding to form a first precipitation solution. In some embodiments, the weakly alkaline manganese salt includes MnCO₃, Mn(OH)₃, or other suitable weakly alkaline manganese salts. In some embodiments, the pH value of the weakly alkaline manganese salt is greater than 7, for example, between 7.5 and 10. In some embodiments, the nickel salt includes nickel nitrate, nickel chloride, nickel acetate, nickel oxalate, or other organic nickel salts. More specifically, in this step, part of the weakly alkaline manganese salt is decomposed, carbon dioxide is released, and nickel hydroxide precipitates are precipitated.

In some embodiments, the pH value of the first precipitation solution is between 6 and 7. In other words, the first precipitation solution is weakly acidic. In some embodiments, the first precipitation solution includes nickel hydroxide precipitate (Ni(OH)ₙ₍ₛ₎). In some embodiments, the molar ratio of nickel salt to weakly alkaline manganese salt in the nickel salt aqueous solution is between (0.2-0.3):(0.265-0.3). In certain embodiments, when the molar ratio of nickel salt in the nickel salt aqueous solution to weakly alkaline manganese salt is less than a certain value, such as 0.2:0.3, the acidity provided by the nickel salt is insufficient, resulting in insufficient CO₂ removal capacity of manganese carbonate and a higher specific surface area value of the final LMR. On the contrary, when the molar ratio of nickel salt in the nickel salt aqueous solution to weakly alkaline manganese salt is greater than a certain value, such as 0.3:0.265, the acidity provided by the nickel salt is sufficient, resulting in complete removal of CO₂ from manganese carbonate and a lower specific surface area value of the final LMR.

A lithium salt and a metal salt are added in a manganese salt aqueous solution to form a second precipitation solution, in which the metal salt includes a metal ion, the metal ion includes Na+ , K+ , Ti³⁺, or combinations thereof, and the manganese salt aqueous solution is acidic. More specifically, the manganese salt aqueous solution can be placed in a high-energy grinder for cyclic grinding, and the lithium salt and the metal salt can be added sequentially or simultaneously during the grinding to form the second precipitation solution. In some embodiments, the lithium salt includes lithium carbonate, lithium hydroxide, lithium acetate, or lithium nitrate. In some embodiments, the manganese salt includes manganese nitrate (Mn(NO₃)₂). More specifically, in this step, the lithium salt and the metal salt are decomposed, carbon dioxide is released, and manganese hydroxide precipitates are precipitated. In some embodiments, the pH value of the manganese salt aqueous solution is less than 7, for example, 4 to 6.5.

In some embodiments, the pH value of the second precipitation solution is greater than 9. That is to say, the second precipitation solution is alkaline. In some embodiments, the second precipitation solution includes a manganese hydroxide precipitate (Mn(OH)ₙ₍ₛ₎). In some embodiments, the metal salt includes metal carbonates, metal hydroxides, metal oxides, metal nitrates, metal acetates, metal oxalates, or combinations thereof. For example, the metal salt may include sodium carbonate, potassium carbonate, titanium carbonate, sodium hydroxide, potassium hydroxide, titanium hydroxide, sodium oxide, potassium oxide, titanium oxide, sodium nitrate, potassium nitrate, titanium nitrate, sodium acetate, potassium acetate, titanium acetate, sodium oxalate, potassium oxalate, titanium oxalate, or combinations thereof.

In some embodiments, the molar ratio of manganese salt in the manganese salt aqueous solution, lithium salt and metal salt is between (0.265-0.3):(1.14-1.20):(0.02-0.06). In this embodiment, the manganese salt and the metal salt are acidic metal salts, and the lithium salt is lithium carbonate. By doing so, it is expected that the CO₂ of carbonate ions can be removed as much as possible in the acid-base reaction. Therefore, the total number of moles of manganese salt and metal salt is (manganese salt + metal salt): (lithium salt) = (0.267~0.36): (1.14~1.20). In certain embodiments, when the molar ratio of (manganese salt + metal salt) to (lithium salt) in the manganese salt aqueous solution is less than a certain value, such as 0.267:1.20, the acidity provided is insufficient, resulting in insufficient CO₂ removal capacity of lithium carbonate and a higher specific surface area value of the final LMR. On the contrary, when the molar ratio of (manganese salt + metal salt) to (lithium salt) in the manganese salt aqueous solution is greater than a certain value, such as 0.36:1.14, the acidity provided is sufficient, resulting in complete removal of CO₂ from manganese carbonate and a lower specific surface area value of the final LMR.

It should be noted that the first precipitation solution and the second precipitation solution need to be prepared separately to reduce the large amount of carbon dioxide gas released during the reaction, thereby reducing the specific surface area of the subsequently generated LMR powder. However, the first precipitation solution and the second precipitation solution may be performed simultaneously or sequentially.

Next, the first precipitation solution and the second precipitation solution are mixed to form a precursor solution and removing liquid from the precursor solution to form a precursor dry powder. In more detail, the first precipitation solution and the second precipitation solution are nano-milled at a heating temperature for about 3 hours to form the precursor solution. In some embodiments, the pH value of the precursor solution is greater than 7.5. Next, a spray drying process is performed on the precursor solution to obtain the precursor dry powder. In some embodiments, the average particle size of the precursor dry powder is less than 10 microns.

In some embodiments, during the mixing of the first precipitation solution and the second precipitation solution, the heating temperature is between about 40°C and about 80°C. In certain embodiments, when the heating temperature is lower than a certain value, such as 40°C, during the mixing of the first precipitation solution and the second precipitation solution, the chemical reaction rate and integrity of the solution cannot be promoted, thereby failing to achieve the desired effect. On the contrary, when the heating temperature is greater than a certain value, such as 80°C, during the mixing of the first precipitation solution and the second precipitation solution, it means that the reaction rate of the solution is too fast and the new product is easily to cover the original reactant after completing part of the reaction, resulting in incomplete reaction. Therefore, the heating temperature may be 45°C, 50°C, 55°C, 60°C, 65°C, 70°C, or 75°C during the mixing of the first precipitation solution and the second precipitation solution.

A heat treatment is then performed to the precursor dry powder to form the lithium-rich manganese-based cathode material. In more detail, the precursor dry powder is placed in a high-temperature furnace and introduced into a treatment atmosphere, the temperature is raised to a heat treatment temperature at a heating rate of 5°C/min, and the temperature is maintained for a heat treatment time, and then naturally cooled to obtain the lithium-rich manganese-based cathode material (LMR). The lithium-rich manganese-based cathode material (LMR) is in the form of polycrystalline powder.

In some embodiments, the heat treatment temperature is between about 800°C and about 1100°C during the heat treatment. In certain embodiments, when the heat treatment temperature is lower than a certain value, such as 800°C, the LMR layered structure is incomplete, Li⁺ ions are not easy to leave the structure, and there are fewer activated Li⁺ ions, that is, it contributes to a lower capacity. On the contrary, when the heat treatment temperature is higher than a certain value, such as 1100°C, the excessively high temperature can easily lead to serious agglomeration of the LMR powder and low capacity utilization. Therefore, the heat treatment temperature may be 850°C, 900°C, 950°C, 1000°C or 1050°C. In some embodiments, the heat treatment time is between 8 hours and 16 hours during the heat treatment. In certain embodiments, when the heat treatment time is less than a certain value, such as 8 hours, the layered structure of LMR is incomplete, especially in the superlattice Li₂MnO₃, which presents an upward slanted lithium desorption platform at 4.6V. This indicates that Li⁺ ions are not easy to leave the structure and there are fewer activated Li⁺ ions, that is, it contributes to lower capacity. On the contrary, when the heat treatment time is greater than a certain value, such as 16 hours, the LMR structure is completely generated, and a heat treatment time that is too long is not productive. Therefore, the heat treatment time may be 9 hours, 10 hours, 11 hours, 12 hours, 13 hours, 14 hours or 15 hours. In some embodiments, during the heat treatment, the heat treatment atmosphere includes air, pure oxygen, or a mixture thereof.

Another aspect of the present disclosure is a lithium-rich manganese-based cathode material prepared by the above preparation method. A chemical formula of the lithium-rich manganese-based cathode material is: Li_{1.2-y}A_{y}Ni_{0.4x}Mn_{0.8-0.4x}O₂, A is Na, K, Ti, or combinations thereof, wherein 0.375≤x≤0.5, and 0.03≤y≤0.07. In some embodiments, the ratio of the molar number of the weakly alkaline manganese salt to the molar number of manganese in the lithium-rich manganese-based cathode material is (0.25-0.5):1, for example, it can be 0.3:1, 0.35:1, 0.4:1 or 0.45:1.

In some embodiments, the chemical formula of the lithium-rich manganese-based cathode material may be Li_{1.15}Na_{0.05}Ni_{0.2}Mn_{0.6}O₂. In some embodiments, a specific surface area of the lithium-rich manganese-based cathode material is from 1.8 m²/g to 2.5 m²/g. For example, the specific surface area of the lithium-rich manganese-based cathode material may be 1.9 m²/g, 2.0 m²/g, 2.1 m²/g, 2.2 m²/g, 2.3 m²/g, or 2.4 m²/g. It should be noted that the lithium-rich manganese-based cathode material with lower specific surface area can inhibit the characteristic of lithium-rich manganese-based positive electrode materials that their structure is prone to rapid degradation. In some embodiments, a porosity of the lithium-rich manganese-based cathode material is from 22.6 vol% to 28.4 vol%. For example, the porosity of the lithium-rich manganese-based cathode material may be 22.8vol%, 23.0vol%, 23.5vol%, 24.0vol%, 24.5vol%, 25.0vol%, 25.5 vol%, 26.0vol%, 26.5 vol%, 27.0 vol%, 27.5 vol%, or 28.0vol%.

The lithium-rich manganese-based positive electrode material disclosed herein has multiple advantages. For example, the lithium-rich manganese-based positive electrode material prepared by the above preparation method has a smaller specific surface area. Therefore, the rapid decay of the LMR structure may be avoided, thereby improving the electrochemical stability of the LMR.

The following Examples are provided to illustrate certain aspects of the present disclosure and to aid those of skill in the art in practicing this disclosure. These Examples are in no way to be considered to limit the scope of the disclosure in any manner.

Comparative Example 1: Preparation of lithium-rich manganese-based cathode materials using a single manganese source

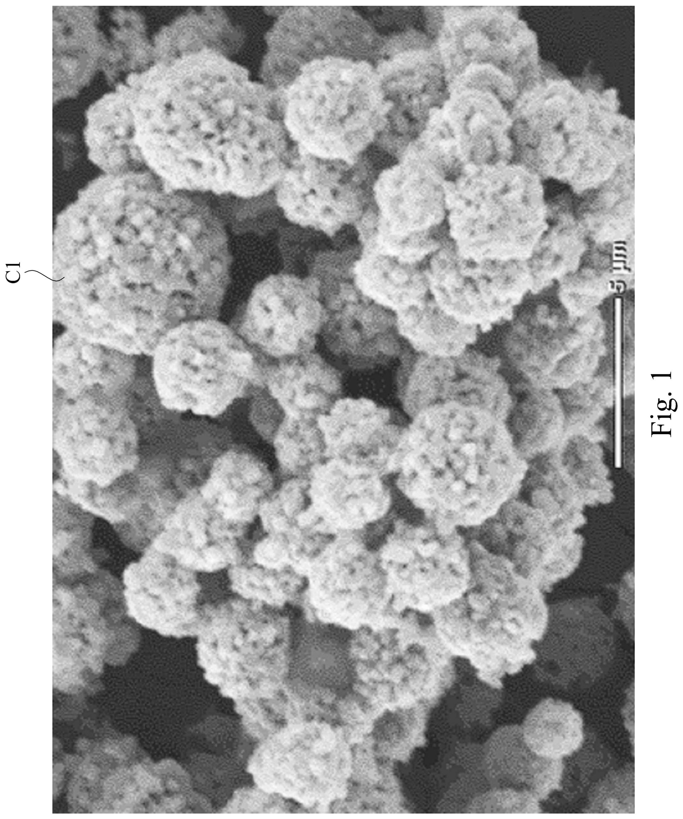

Fig. 1 is a diagram of LMR polycrystalline powder of comparative example 1 of the present disclosure. The experimental steps are as follows. 116.3 g of nickel nitrate (Ni(NO₃)₂·6H₂O) was added to 1000 mL of deionized water and stirred until completely dissolved. The nickel nitrate aqueous solution was poured into a high energy grinder for cyclic grinding. 138 g of manganese carbonate (MnCO₃), 85 g of lithium carbonate (Li₂CO₃) were added while grinding, and 5.3 g of sodium carbonate (Na₂CO₃) was finally added and grounded together. At this time, the acidic nickel nitrate was neutralized with the alkaline manganese carbonate, lithium carbonate, and sodium carbonate, and a small amount of carbonate ions were dissociated to produce carbon dioxide. After 3 hours of nano-milling, the precursor slurry was ready. The precursor slurry was performed to a spray drying process to obtain a precursor dry powder with an average particle size of <10 µm. The dry powder was placed in a high temperature furnace and introduced into an air atmosphere. The temperature was raised to 950°C at a rate of 5°C/min and maintained at that temperature for 12 hours, followed by natural cooling, thereby obtaining a lithium-rich manganese-based cathode material polycrystalline powder C1 of Li_{1.15}Na_{0.05}Ni_{0.2}Mn_{0.6}O₂, as shown in Fig. 1.

The specific surface area of the lithium-rich manganese-based cathode material polycrystalline powder C1 of Comparative Example 1 was measured by the single-layer adsorption mode of the Brunauer-Emmett-Teller (BET) method to be 5.6 m²/g. The porosity of the lithium-rich manganese-based cathode material polycrystalline powder C1 of Comparative Example 1 was measured by a mercury porosimeter to be 43.2 vol %.

### Embodiment 1: Preparation of lithium-rich manganese-based cathode materials using two different manganese sources

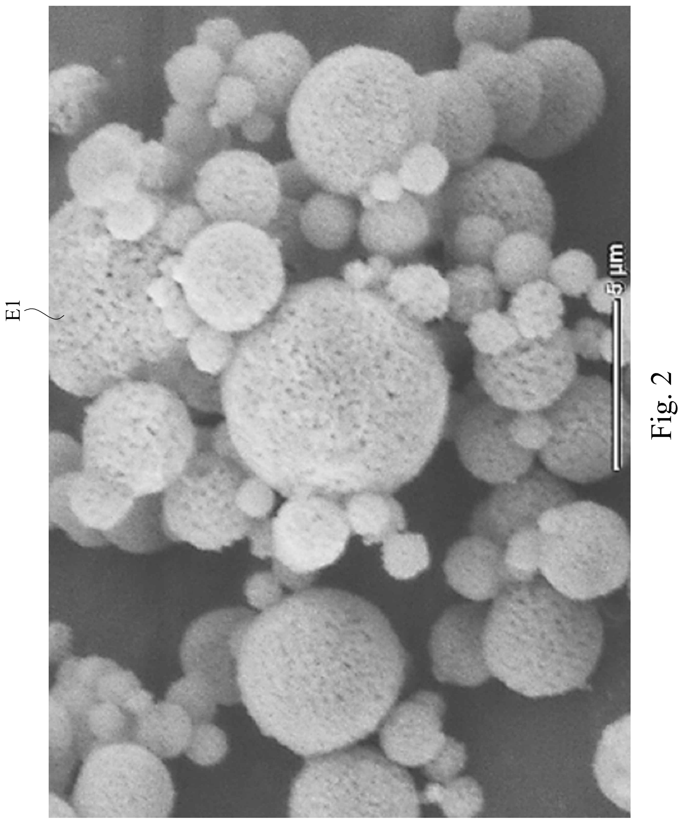

It should be noted that in Embodiment 1, the molar ratio of two different manganese source reactants (manganese carbonate and manganese nitrate) is 1:1, and the experimental steps are as follows. Fig. 2 is a diagram of the LMR polycrystalline powder of the embodiment 1 of the present disclosure. 116.3 g of nickel nitrate (Ni(NO₃)₂·6H₂O) was added to 700 mL of deionized water and stirred until completely dissolved. The nickel nitrate aqueous solution was poured into a high energy grinder for cyclic grinding. 69.2 g of manganese carbonate (MnCO₃) was added while grinding. The acidic nickel nitrate promotes the decomposition of part of the manganese carbonate to release CO₂ and precipitate Ni(OH)ₙ, thereby obtaining a first precipitation solution with a pH value between 6 and 7. On the other hand, 150.6 g of manganese nitrate (Mn(NO₃)₂ · 4H₂O) was added to 700 mL of deionized water and completely dissolved. When a high-energy grinder is used for cyclic grinding, 85 g of lithium carbonate (Li₂CO₃) and 5.3 g of sodium carbonate (Na₂CO₃) were added in sequence. The reaction between the two causes part of the lithium carbonate and sodium carbonate to decompose to release CO₂ and precipitate Mn(OH)ₙ, thereby obtaining a second precipitation solution with a pH value > 9. The first precipitation solution and the second precipitation solution prepared above were mixed, and nano-milling was performed at a temperature of 40°C to 80°C for 3 hours to obtain the precursor slurry. The pH value of the precursor slurry is greater than 7.5. The precursor slurry was subjected to a spray drying process to obtain a precursor dry powder with an average particle size of <10 microns. The dry powder was placed in a high temperature furnace and introduced into an air atmosphere. The temperature was raised to 1000°C at a rate of 5°C/min and maintained at that temperature for 10 hours, followed by natural cooling, thereby obtaining a lithium-rich manganese-based cathode material polycrystalline powder E1 of Li_{1.15}Na_{0.05}Ni_{0.2}Mn_{0.6}O₂, as shown in Fig. 2.

The specific surface area of the lithium-rich manganese-based cathode material polycrystalline powder E1 of Embodiment 1 was measured by the single-layer adsorption mode of the Brunauer-Emmett-Teller (BET) method to be 2.4 m²/g. The porosity of the lithium-rich manganese-based cathode material polycrystalline powder E1 of Embodiment 1 was measured by a mercury porosimeter to be 28.4 vol %.

By using the preparation methods of the above Comparative Example 1 and Embodiment 1, the lithium-rich manganese-based cathode material of Li_{1.15}Na_{0.05}Ni_{0.2}Mn_{0.6}O₂ can be synthesized. The compositions of the two are the same and within the scope of the present disclosure, but the specific surface area and porosity of the lithium-rich manganese-based cathode material of Embodiment 1 are much smaller than the specific surface area and porosity of the lithium-rich manganese-based cathode material of Comparative Example 1.

Comparative Example 2: Preparation of lithium-rich manganese-based cathode materials using two different manganese sources

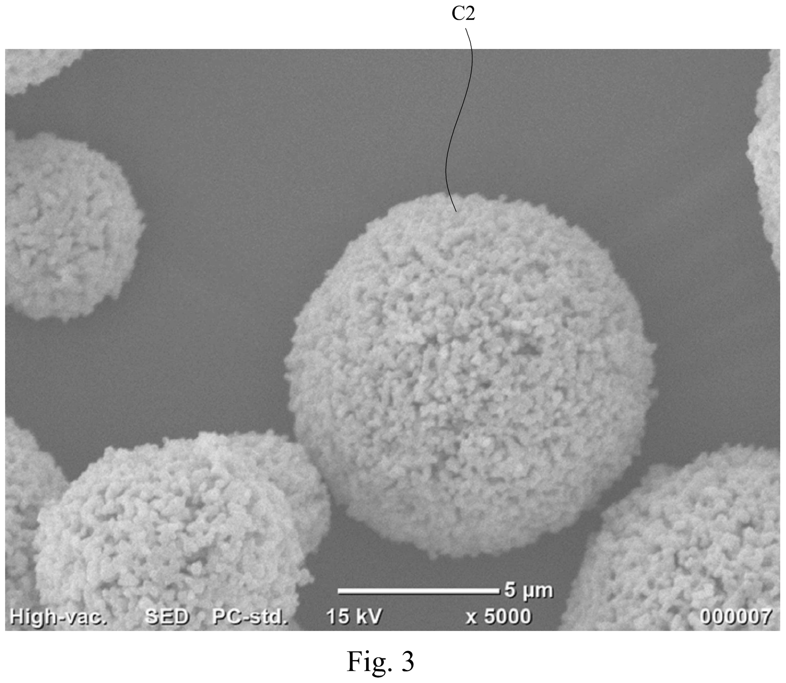

It should be noted that, compared with Embodiment 1, the molar ratio of two different manganese source reactants (manganese carbonate and manganese nitrate) in Comparative Example 2 is adjusted to 1:1, and the experimental steps are as follows. 175 g of nickel nitrate (Ni(NO₃)₂ · 6H₂O) was added to 700 mL of deionized water and stirred until completely dissolved. The nickel nitrate aqueous solution was poured into a high energy grinder for cyclic grinding. 115 g of manganese carbonate (MnCO₃) was added while grinding. The acidic nickel nitrate promotes the decomposition of part of the manganese carbonate to release CO₂ and precipitate Ni(OH)ₙ, thereby obtaining a first precipitation solution with a pH value between 6 and 7. On the other hand, 133 g of manganese nitrate (Mn(NO₃)₂ · 4H₂O) was added to 700 mL of deionized water and completely dissolved. When a high-energy grinder is used for cyclic grinding, 85 g of lithium carbonate (Li₂CO₃) and 3.18 g of sodium carbonate (Na₂CO₃) were added in sequence. The reaction between the two causes part of the lithium carbonate and sodium carbonate to decompose to release CO₂ and precipitate Mn(OH)ₙ, thereby obtaining a second precipitation solution with a pH value > 9. The first precipitation solution and the second precipitation solution prepared above were mixed, and nano-milling was performed at a temperature of 40°C to 80°C for 3 hours to obtain the precursor slurry. The pH value of the precursor slurry is greater than 7.5. The precursor slurry was subjected to a spray drying process to obtain a precursor dry powder with an average particle size of <10 microns. The dry powder was placed in a high temperature furnace and introduced into an air atmosphere. The temperature was raised to 1000°C at a rate of 5°C/min and maintained at that temperature for 10 hours, followed by natural cooling, thereby obtaining a lithium-rich manganese-based cathode material polycrystalline powder C2 of Li_{1.14}Na_{0.03}Ni_{0.3}Mn_{0.53}O₂, as shown in Fig. 3.

The specific surface area of the lithium-rich manganese-based cathode material polycrystalline powder C2 of Comparative Example 2 was measured by the single-layer adsorption mode of the Brunauer-Emmett-Teller (BET) method to be 2.4 m²/g. The porosity of the lithium-rich manganese-based cathode material polycrystalline powder C2 of Comparative Example 2 was measured by a mercury porosimeter to be 28.4 vol %. The synthetic stoichiometry differences between the Comparative Example 2 and Embodiment 1 are as follows: Comparative Example 2 is a lithium-rich manganese-based cathode material of Li_{1.14}Na_{0.03}Ni_{0.3}Mn_{0.53}O₂, with a reference structural formula of Li_{1.2-y}A_{y}Ni_{0.4x}Mn_{0.8-0.4x}O₂, wherein x=0.75 (Ni=0.3, Mn=0.53), y=0.03, and the doped A is Na+, but the stoichiometry of Ni and Mn is outside the reasonable stoichiometric design (x≤0.5) explained in this disclosure.

### Experimental Example 1: Manufacturing a Button Battery of LMR|Li

In this experimental example, the LMR powders of Comparative Example 1, Embodiment 1 and Comparative Example 2 were mixed with N-methylpyrrolidone (1-Methyl-2-pyrrolidone, NMP), respectively. The mixture of NMP and LMR powder: conductive agent: adhesive was prepared in a ratio of 86:6:8 (with a solid content of about 42 wt % to 45 wt %) and coated on a 15 µm aluminum collector layer. Next, after drying, a 12 mm diameter electrode was used to make an LMR|Li button battery (R2032). In some embodiments, the conductive aid includes Super P. In some embodiments, the adhesive includes a fluorine-based resin, such as PVdF. The battery was charged and discharged at 2V to 4.7V using a 0.1C constant current.

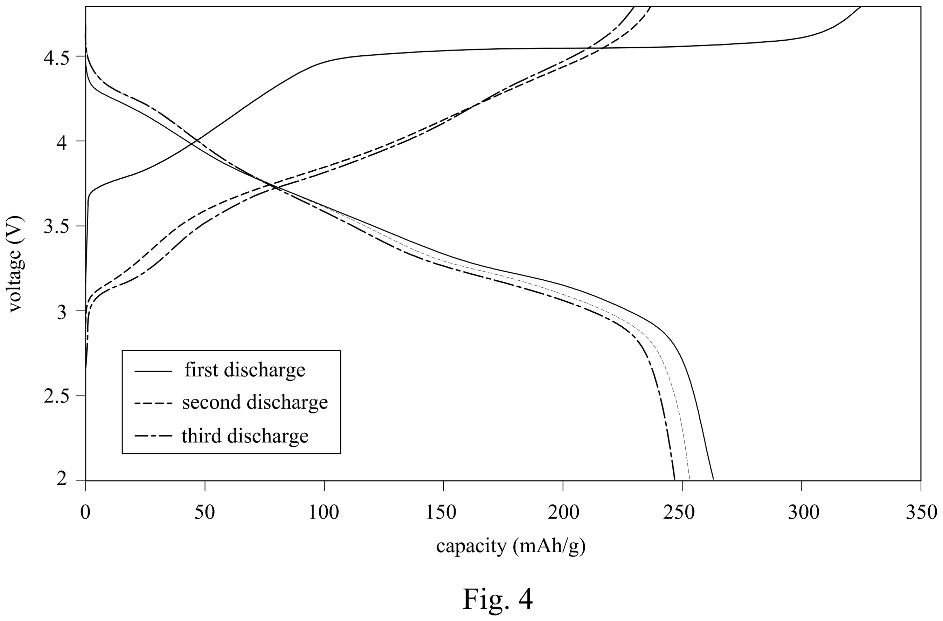

Fig. 4 is a charge and discharge curve diagram of a button-type battery made using comparative example 1 of the present disclosure. As shown in Fig.4, the initial charge capacity was 322 mAh/g, the reversible discharge capacity was 263 mAh/g, and the initial coulombic efficiency (ICE) was 81.7%. It can be understood that the capacity of the initial charge less than 4.5V is contributed by the LiMO₂ layered structure in the LMR structure, and its capacity is about 100mAh/g. The capacity greater than and/or equal to 4.5V is contributed by Li₂MnO₃ in the LMR structure, with a capacity of 222mAh/g.

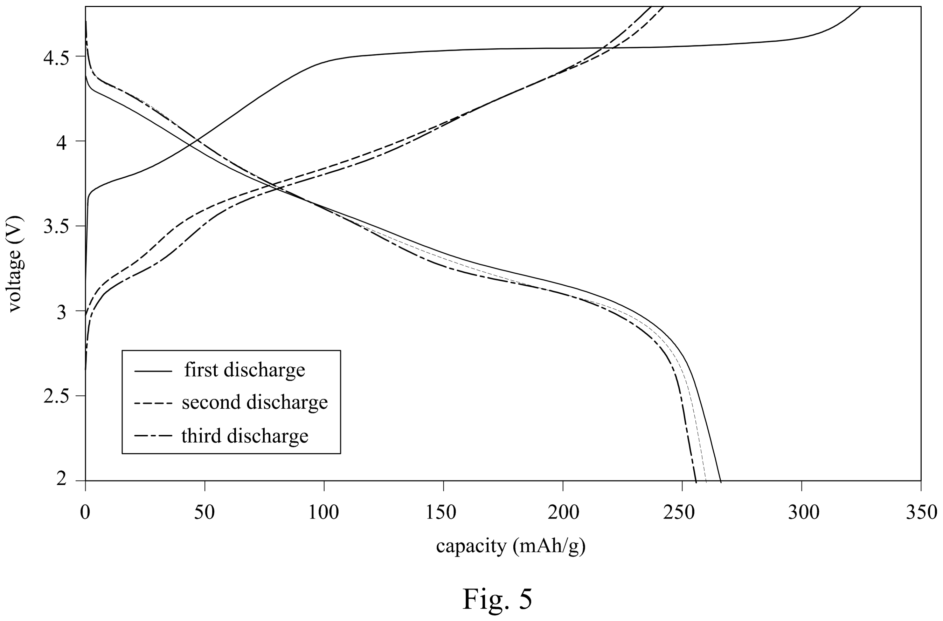

Fig. 5 is a charge and discharge curve diagram of a button-type battery made using embodiment 1 of the present disclosure. As shown in Fig.5, the initial charge capacity was 320 mAh/g, the reversible discharge capacity was 265 mAh/g, and the initial coulombic efficiency (ICE) was 82.8%. It can be understood that the capacity of the initial charge below 4.5V is contributed by the LiMO₂ layered structure in the LMR structure. Due to the lower content of Ni, it only contributes about 100 mAh/g of capacity. The content of Mn is higher, so the capacity greater than and/or equal to 4.5V is contributed by Li₂MnO₃ in the LMR structure, with a capacity of 231mAh/g.

It can be seen from Fig. 4 and Fig. 5 that the increase in the amount of Mn element can improve the reversible capacity of LMR.

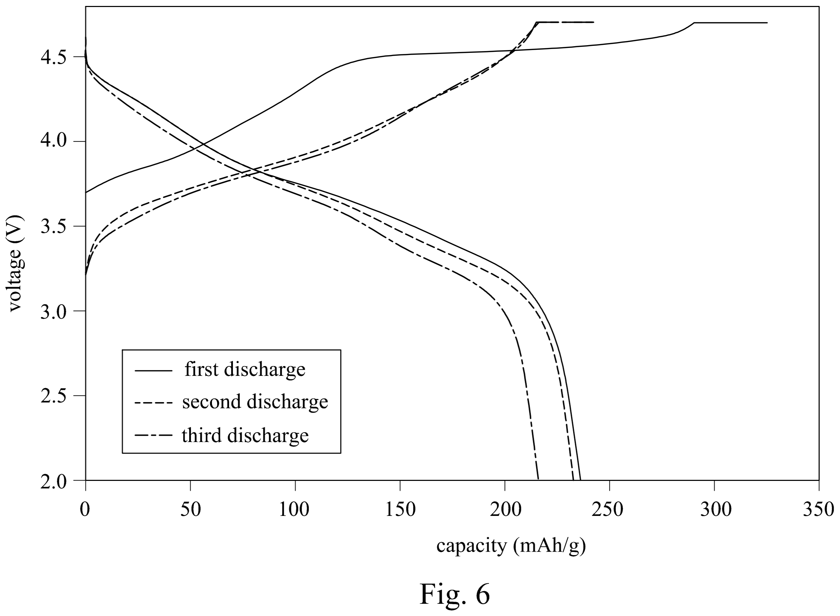

Fig. 6 is a charge and discharge curve diagram of a button-type battery made using comparative example 2 of the present disclosure. As shown in Fig.6, the initial charge capacity was 330 mAh/g, the reversible discharge capacity was 240 mAh/g, and the initial coulombic efficiency (ICE) was 72.7%. It can be understood that the capacity of the initial charge less than 4.5V is contributed by the LiMO2 layered structure in the LMR structure. Due to the lower content of Ni, it only contributes about 100 mAh/g of capacity. Since the stoichiometry of Ni is slightly higher and exceeds the stoichiometric range of the present disclosure, the contributed capacity is increased to about 120 mAh/g. The capacity greater than and/or equal to 4.5V is contributed by Li₂MnO₃ in the LMR structure, with a capacity of 220mAh/g. As can be seen from Fig. 5 and Fig. 6, the present disclosure can adjust the charge and discharge capacity of the cathode material by designing the stoichiometry of the LMR cathode material.

### Experimental Example 2: Cycle test

In this experimental example, the LMR|Li button cell made of the LMR obtained in Embodiment 1 and the LMR|Li button cell made of the LMR obtained in Comparative Example 1 were subjected to cycle tests at a constant current of 0.2C and a voltage range of 2V to 4.7V.

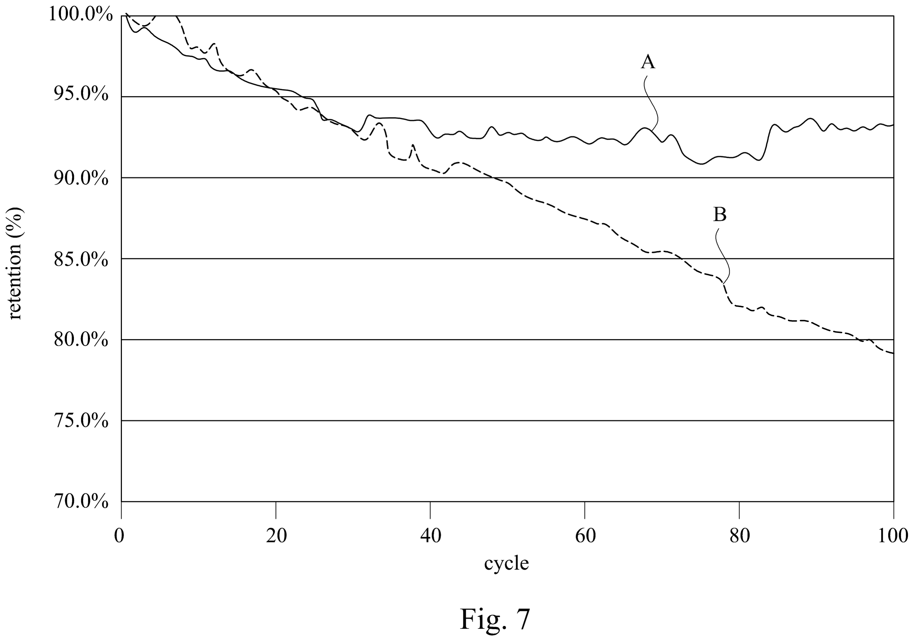

Fig. 7 is a schematic diagram of a cycle test of button-type batteries made of polycrystalline powders of embodiment 1 and comparative example 1 of the present disclosure, in which curve A is the LMR prepared using Embodiment 1, and curve B is the LMR prepared using Comparative Example 1. As can be seen from Fig. 7, since the LMR polycrystalline powder prepared in Embodiment 1 has a low specific surface area and a low porosity, the material has better cycle stability. Curve A shows that there is still 93.4% capacity retention after 100 cycles, while curve B shows that there is only 79.3% capacity retention after 100 cycles.

## Claims

1. A lithium-rich manganese-based cathode material, **characterized by** having a chemical formula of:
Li_{1.2-y}A_{y}Ni_{0.4x}Mn_{0.8-0.4x}O₂, A is Na, K, Ti, or combinations thereof, wherein 0.375≤x≤0.5, and 0.03≤y≤0.07.

2. The lithium-rich manganese-based cathode material of claim 1, **characterized in that** the chemical formula of the lithium-rich manganese-based cathode material is Li_{1.15}Na_{0.05}Ni_{0.2}Mn_{0.6}O₂.

3. The lithium-rich manganese-based cathode material of claim 1 or 2, **characterized in that** a specific surface area of the lithium-rich manganese-based cathode material is from 1.8 m²/g to 2.5 m²/g.

4. The lithium-rich manganese-based cathode material of any one of claims 1-3, **characterized in that** a porosity of the lithium-rich manganese-based cathode material is from 22.6 vol% to 28.4 vol%.

5. A preparation method of a lithium-rich manganese-based cathode material, **characterized by** comprising:
adding a weakly alkaline manganese salt in a nickel salt aqueous solution to form a first precipitation solution;
adding a lithium salt and a metal salt in a manganese salt aqueous solution to form a second precipitation solution, wherein the metal salt comprises a metal ion, the metal ion comprises Na⁺, K⁺, Ti³⁺, or combinations thereof, and the manganese salt aqueous solution is acidic;
mixing the first precipitation solution and the second precipitation solution to form a precursor solution and removing liquid from the precursor solution to form a precursor dry powder; and
performing a heat treatment to the precursor dry powder to form the lithium-rich manganese-based cathode material.

6. The preparation method of the lithium-rich manganese-based cathode material of claim 5, **characterized in that** a pH value of the first precipitation solution is from 6 to 7.

7. The preparation method of the lithium-rich manganese-based cathode material of claim 5 or 6, **characterized in that** a pH value of the second precipitation solution is greater than 9.

8. The preparation method of the lithium-rich manganese-based cathode material of any one of claims 5-7, **characterized in that** the metal salt comprises a metal carbonate, a metal hydroxide, a metal oxide, a metal nitrate, a metal acetate, a metal oxalate, or combinations thereof.

9. The preparation method of the lithium-rich manganese-based cathode material of any one of claims 5-8, **characterized in that** during the heat treatment, a heat treatment temperature is between about 800°C and about 1100°C.

10. The preparation method of the lithium-rich manganese-based cathode material of any one of claims 5-9, **characterized in that** during the heat treatment, a heat treatment time is between 8 hours and 16 hours.

11. The preparation method of the lithium-rich manganese-based cathode material of any one of claims 5-10 **characterized in that** during the mixing of the first precipitation solution and the second precipitation solution, a heating temperature is between about 40°C and about 80°C.

12. The preparation method of the lithium-rich manganese-based cathode material of any one of claims 5-11 **characterized in that** the first precipitation solution comprises a nickel hydroxide precipitate.

13. The preparation method of the lithium-rich manganese-based cathode material of any one of claims 5-12, **characterized in that** the second precipitation solution comprises a manganese hydroxide precipitate.

14. The preparation method of the lithium-rich manganese-based cathode material of any one of claims 5-13, **characterized in that** a molar ratio of a nickel salt in the nickel salt aqueous solution to the weakly alkaline manganese salt is (0.2-0.3): (0.265-0.3).

15. The preparation method of the lithium-rich manganese-based cathode material of any one of claims 5-14, **characterized in that** a molar ratio of a manganese salt in the manganese salt aqueous solution, the lithium salt, and the metal salt is (0.265-0.3):(1.14-1.20):(0.02-0.06).
